# EUROPÄISCHE PATENTSCHRIFT

(11) **EP 1 977 295 B1**
(45) Veröffentlichungstag und Bekanntmachung des Hinweises auf die Patenterteilung: **13.06.2012**
(21) Anmeldenummer: 06706235.6
(22) Anmeldetag: 14.01.2006
(51) Int. Cl.: G05B 19/404

(54) **VERFAHREN ZUR ACHSREGELUNG**
SHAFT REGULATION METHOD
PROCÉDÉ DE RÉGLAGE D'AXES

(43) Veröffentlichungstag der Anmeldung: 08.10.2008
(73) Patentinhaber: TRUMPF Werkzeugmaschinen GmbH + Co. KG, 71254 Ditzingen (DE)
(72) Erfinder: SCHOLICH-TESSMANN, Wolfgang, 71032 Böblingen (DE)
(74) Vertreter: Kohler Schmid Möbus
(86) Internationale Anmeldenummer: PCT/EP2006/000293
(87) Internationale Veröffentlichungsnummer: WO 2007/079778

(56) Entgegenhaltungen:
- EP-A- 1 143 315
- US-A- 5 109 148
- US-A- 5 452 275
- US-A- 5 801 939

## Beschreibung

Die Erfindung betrifft ein Verfahren zur Einstellung der Relativposition und/oder Relativbewegung zwischen einem Werkstück und einem Werkzeug einer Werkzeugmaschine in Richtung einer Achse, wobei in einem ersten Regler einer Basisachsregelung eine Stellgröße für eine einen oder mehrere Antriebe umfassende Basisachse und in einem zweiten Regler einer Zusatzachsregelung eine Stellgröße für wenigstens eine einen Antrieb umfassende höher dynamischen Zusatzachse generiert wird, wobei die Basisachse und die Zusatzachse in Ihrer Wirkung mechanisch hintereinander geschaltet werden, sowie eine Werkzeugmaschine, insbesondere zur Durchführung des Verfahrens.

Eine derartige Vorrichtung ist beispielsweise aus der US 5,801,939 bekannt.

Bei Werkzeugmaschinen werden beispielsweise Werkzeughalter, die ein Werkzeug halten, oder Laserbearbeitungsköpfe als Werkzeug über Antriebe und möglicherweise dazwischen geschaltete mechanische Komponenten, wie Getriebe oder Portale, an denen der Werkzeughalter oder der Laserbearbeitungskopf befestigt sein kann, in eine bestimmte Achsrichtung bewegt. Abkürzend wird dies häufig mit Werkzeugachse oder nur als Achse bezeichnet. Alternativ oder zusätzlich ist es möglich, ein Werkstück über einen Antrieb in eine bestimmte Achsrichtung zu bewegen. Dies wird abkürzend häufig als Werkstückachse oder auch nur als Achse bezeichnet. Sind zwei Antriebe vorhanden, die in dieselbe Achsrichtung wirken, so wird der eine Antrieb, der häufig eine geringere Dynamik aufweist, typischerweise als Haupt- oder Grundachse und der zweite Antrieb, der häufig eine höhere Dynamik aufweist, typischerweise als Zusatzachse bezeichnet. Ein weiterer häufig verwendeter Begriff ist der der Basisachse. Eine Basisachse kann eine oder mehrere in eine resultierende Gesamtrichtung wirkende Grundachsen, d.h. mit relativ geringer Dynamik, umfassen. Da das Bearbeitungsergebnis der Relativbewegung zwischen Werkzeug und Werkstück entspricht, ist nicht entscheidend ob Werkzeug oder Werkstück bewegt wird.

An Werkzeugmaschinen bauen Grundachsen häufig sehr groß, weil sie weitere Achsen und Aufbauten bewegen müssen. Dies führt zu großen bewegten Massen und geringen mechanischen Eigenfrequenzen. Deshalb ist die Dynamik dieser Grundachsen stark begrenzt, sowohl bezüglich der erreichbaren Geschwindigkeiten und Beschleunigungen, als auch im Hinblick auf Regelkreisdynamik und damit auf die dynamische Achsgenauigkeit. Im Gegenzug ermöglichen die Grundachsen große Verfahrwege. Werden diese Grundachsen eingesetzt, um den Abstand eines Bearbeitungskopfes zu einem Werkstück konstant zu halten, so weist diese Abstandsregelung eine stark begrenzte Regelkreisdynamik auf.

Bringt man dicht am so genannten Tool Center Point (TCP) eine kurzhubige Zusatzachse an, um den Abstand zum Werkstück zu regeln, so muss diese Achse nur relativ geringe Massen bewegen und kann daher schnelle Bewegungen und eine hohe Regelkreisdynamik realisieren. An Maschinen mit beispielsweise fünf Freiheitsgraden wirkt eine Positionsänderung der Zusatzachse, welche den Abstand des TCP zu einem Werkstück verändert, wie eine variable Werkzeuglänge. Dies beeinflusst die Bahngenauigkeit der Maschine negativ.

Aus der US 5,801,939 ist eine Vorrichtung mit einer Einrichtung zur Grobpositionierung (Grundachse) und einer Einrichtung zur Feinpositionierung (Zusatzachse) bekannt. Ein Summierglied summiert die durch die beiden Einrichtungen verursachten Bewegungen. Ein Erfassungsglied generiert ein die Gesamtbewegung beschreibendes Signal. Dieses Signal wird mit einem Sollwert verglichen und die Abweichung (Regelfehler des Achsverbunds) wird den beiden Einrichtungen als Eingangssignal übergeben. In der Einrichtung zur Grobpositionierung wird die Einrichtung zur Feinpositionierung simuliert. Eine rechnerische Nachbildung einer Achse führt zu einem entsprechenden Aufwand in der Regelungseinrichtung und weist immer Abweichungen zu der realen Achse auf. Der Istwert der Zusatzachse wird nicht gemessen. Stattdessen wird der Regelfehler des Achsverbunds zuzüglich einem Anteil der simulierten Zusatzachsposition auf die Grundachse gegeben.

In der US 5,109,148 ist eine Positioniereinrichtung beschrieben, die zwei unabhängige Antriebe umfasst, um die Relativposition zwischen einem Werkzeug und einem Werkstück einzustellen. Hierzu weist die Einrichtung zwei voneinander unabhängige Lage-Regelkreise auf. Der erste Regelkreis für den Antrieb geringerer Dynamik (Grundachse) erhält über ein Filter bandbreitenbegrenzte Lagesollwerte und stellt damit die gewünschte Lage (Relativposition) "grob" ein, d.h. im Rahmen seiner eingeschränkten Dynamik. Die Anteile, welche die Grundachse dynamisch nicht realisieren kann, werden an den zweiten Regelkreis (Zusatzachse) gegeben. Somit bekommt die Zusatzachse die Aufgabe, all jene Anteile im Verlauf bis zur Sollrelativposition umzusetzen, welche die lagegeregelte Grundachse nicht realisieren kann. Deshalb wird die Ist-Lage der Grundachse verwendet, um einen Sollwert für die Zusatzachse zu bilden, indem die Abweichung der Ist-Lage von der Sollrelativposition ermittelt wird.

Aus der EP 1 143 315 A2 ist eine Steuerung für zwei Antriebsachsen bekannt, welche in ihrer Wirkung parallel geschaltet sind. Außerdem ist ein dritter Regler für zwei parallele Achsen bekannt, welcher eine Stellgröße generiert, die sowohl der einen Achse als auch der anderen Achse zugeführt wird, um Torsionen und Vibrationen zu vermeiden.

Die US 5,452,275 betrifft eine Steuerung für Antriebssysteme mit in ihrer Wirkung mechanisch hintereinander geschalteten Achsen.

Aufgabe der vorliegenden Erfindung ist es, ein Verfahren und eine Vorrichtung bereitzustellen, womit sowohl die hohe Dynamik der Zusatzachse als auch die großen Verfahrwege der Grundachsen genutzt werden, um die gewünschte Bewegung des TCPs zu erzeugen und gleichzeitig eine hohe Bahngenauigkeit der Maschine zu erreichen.

Diese Aufgabe wird durch ein Verfahren der eingangs genannten Art gelöst, bei dem in einem dritten Regler eine dritte Stellgröße generiert wird, die sowohl der Zusatzachsregelung als auch der Basisachsregelung zugeführt wird. Dadurch kann die Regelung des Gesamtsystems und die Koordinierung der beiden Achsen entkoppelt werden. Außerdem addieren sich die Regelbandbreiten des ersten und zweiten Reglers. Die Basisachse und die Zusatzachse sind in ihrer Wirkung mechanisch hintereinander geschaltet, wobei die Bewegung der Basisachse aus der gleichzeitigen Bewegung mehrerer Grundachsen resultieren kann. Der Regler der Basisachsenregelung sorgt dafür, dass die Basisachse im Rahmen ihrer dynamischen Grenzen bei Bedarf große Verfahrwege realisiert. Der Regler der Zusatzachsenregelung bewirkt eine hohe Dynamik und Regelungsbandbreite, und damit eine hohe Genauigkeit. Das erfindungsgemäße Verfahren kann beispielsweise für eine Abstandsregelung herangezogen werden. Das Verfahren kann jedoch auch jeweils auf mehrere Achspaare, bestehend aus Basisachse und Zusatzachse, für einen Bahnbetrieb eingesetzt werden. Hierfür ist aufeinander abgestimmte Dynamik der kooperierenden Achspaare erforderlich.

Erfindungsgemäß wird ein Ist-Wert der Zusatzachse erfasst wird und dem dritten Regler zugeführt. Indem nur der gemessene Istwert im dritten Regler für die Steuerung der Basisachsen-Geschwindigkeit verwendet wird, kann die mittlere Auslenkung der Zusatzachse, bzw. des dadurch bewegbaren Werkzeugs oder Werkstücks, auf einen festen Wert, zum Beispiel die Mittenposition der Zusatzachse, geregelt werden.

Bei einer Variante der Erfindung kann vorgesehen sein, dass Die Stellgröße des dritten Reglers wird der Basisachsregelung und der Zusatzachsregelung gegengleich zugeführt. Dadurch kann der dritte Regler die Position der Zusatzachse, .z.B. des daran angeordneten Werkzeugs, verändern, ohne den Abstand zum Werkstück zu beeinflussen. Dies ermöglicht dem dritten Regler, stationär eine konstante Lage der Zusatzachse (des dadurch bewegbaren Werkzeugs oder Werkstücks) einzustellen. Anders ausgedrückt ist es möglich, eine Nebenbedingung für die Zusatzachse (z.B. soll diese im eingeschwungenen Zustand in Mittelstellung stehen) einzustellen, ohne die übergeordnete Regelung wesentlich zu beeinflussen.

Dies ist insbesondere dadurch möglich, dass in der Basisachsregelung die Stellgröße des ersten Reglers und des dritten Reglers addiert werden und die Summe als resultierende Stellgröße der Basisachse zugeführt wird, und dass in der Zusatzachsregelung die Stellgröße des dritten Reglers von der ersten Stellgröße des zweiten Reglers subtrahiert wird und die Differenz als resultierende Stellgröße der Zusatzachse zugeführt wird.

Bei einer bevorzugten Verfahrensvariante kann vorgesehen sein, dass die Stellgröße im dritten Regler derart ermittelt wird, dass das an der Zusatzachse angeordnete Werkzeug oder Werkstück eine vorgegebene Position, vorzugsweise eine Mittenposition, bezüglich seines Verfahrwegs an der Zusatzachse einnimmt. Somit weicht die Zusatzachse, bzw. das durch die Zusatzachse bewegte Werkzeug oder Werkstück, stationär möglichst wenig von einer vorgegebenen Position ab. Durch diese Maßnahme wird die Bahngenauigkeit der Maschine, in der das erfindungsgemäße Verfahren implementiert ist, verbessert.

Bei einer vorteilhaften Verfahrensvariante kann vorgesehen sein, dass ein Sollwert für die Relativposition und/oder Relativbewegung vorgegeben wird, ein Istwert für die Relativposition und/oder Relativbewegung erfasst oder ermittelt wird und die Differenz dem ersten und zweiten Regler als Eingangsgröße zugeführt wird. In den gemessenen Ist-Wert können noch weitere Größen eingehen, wie beispielsweise die Lagen der Basis - und der Zusatzachse und die Abweichung zwischen der Teilegeometrie und dem die Teilegeometrie abbildenden NC - Programm.

Besonders bevorzugt ist es, wenn der erste und zweite Regler eine Lageregelung und der dritte Regler eine Nachlaufregelung durchführen. Mit dem Nachlaufregler ist es möglich, die Zusatzachse stationär auf eine vorgegebene Lage zu regeln. Durch das Zusammenwirken der drei Regler ist es möglich, einen großen Verfahrweg bei gleichzeitig hoher Dynamik und Genauigkeit zu realisieren. Dabei weist die Zusatzachse einen geringen Verfahrweg und eine stationär konstante Lage auf.

Wenn der erste Regler schwächer parametriert wird, als es die Basisachse erlaubt, wird die Lageregelung der Basisachse verwendet, um von ihr nicht realisierbare Sollwert-Anteile zu filtern. Eine "schwach" eingestellte Lageregelung stellt einen Tiefpass dar. Der Lageregler ist sowieso vorhanden. Ein separater Tiefpass, wie er im Stand der Technik vorgesehen ist, kann daher eingespart werden. Das spart u.a. auch dessen Parametrierung ein.

Bei einer Verfahrensvariante kann vorgesehen sein, dass anhand des resultierenden Stellsignals für die Basisachse eine Transformation zur Aufteilung der Basisachsenbewegung auf mehrere Grundachsen durchgeführt wird. Beispielsweise kann durch eine NC-Steuerung die von der Basisachse durchzuführende Bewegung durch eine geeignete Transformation auf mehrere Grundachsen aufgeteilt werden und deren Antriebe so angesteuert werden, dass die gewünschte Bewegung der Basisachse entsteht.

In den Rahmen der Erfindung fällt außerdem eine Werkzeugmaschine, mit einer Basisachsregelung, umfassend einen ersten Regler zur Ermittlung einer Stellgröße für eine einen oder mehrere Antriebe umfassende Basisachse zur Bewegung eines Werkzeugs oder eines Werkstücks in einer Achsrichtung und mit einer Zusatzachsregelung, umfassend einen zweiten Regler zur Ermittlung einer Stellgröße für eine mindestens einen Antrieb umfassende Zusatzachse zur Bewegung eines Werkzeugs oder Werkstücks in dieselbe Achsrichtung, wobei ein dritter Regler zur Generierung einer dritten Stellgröße vorgesehen ist, die sowohl der Basisachsenregelung als auch der Zusatzachsenregelung zugeführt ist. Die Zusatzachse, beispielsweise zur Regelung des Abstands eines Bearbeitungskopfs zu einem Werkstück, wird nahe des TCP einer Achse der Maschine angebracht und wirkt in dieselbe Richtung wie eine Bewegung, die aus der Bewegung einer oder mehrerer Grundachsen der Maschine entsteht. (Die Grundachsen müssen nicht in dieselbe Richtung wirken). Diese Zusatzachse weist einen relativ kleinen Verfahrweg, dafür aber eine hohe Dynamik auf. Der Abstand zwischen dem Werkzeug (Bearbeitungskopf) und dem Werkstück kann durch eine Bewegung der Basisachse mit großem Hub, aber geringer Dynamik und Genauigkeit verändert werden. Alternativ oder zusätzlich kann der Abstand durch eine Bewegung der Zusatzachse, welche zwar nur einen geringen Verfahrweg, aber eine hohe Dynamik aufweist, verändert werden. Die Gesamtregelung für die Basis - und Zusatzachse bildet quasi ein Hoch - /Tiefpassfilter für die Sollgröße. Die Dynamik der Basis - und der Zusatzachse ergänzen sich damit. Die Basisachse wird dabei stärker bedämpft. Für eine zeitoptimale Bearbeitung kann fliegend zwischen unterschiedlichen Betriebsarten umgeschaltet werden: nur Basisachse, nur Zusatzachse oder gekoppelter Betrieb.

Bei einer bevorzugten Ausführungsform kann eine Zusatzachsenistwertmesseinrichtung vorgesehen sein, die dem dritten Regler eine Istgröße der Zusatzachsenregelung zuführt. Dadurch ist es möglich, die Zusatzachse, bzw. ein dadurch bewegtes Werkzeug oder Werkstück, auf eine vorgegebene Position entlang ihres Verfahrwegs zu regeln.

Vorzugsweise sind der erste und zweite Regler als Lageregler und der dritte Regler als Nachlaufregler ausgebildet. Über den Lageregler der Basisachsenregelung kann im Rahmen der dynamischen Möglichkeiten unmittelbar auf Abstandsabweichungen zwischen Werkstück und Werkzeug reagiert werden. Da die Bandbreite der Basisachsenregelung sehr begrenzt ist, bleibt die Genauigkeit der Basisachsenbewegung gering, aber sie realisiert großhubige Bewegungsanteile.

Die Abstands- oder Gesamtlageabweichung wird ebenfalls dem Lageregler der Zusatzachsenregelung zugeführt. Die Bewegung der Zusatzachse wirkt in die gleiche Richtung wie die Bewegung der Basisachse. Basis- und Zusatzachse sind also mechanisch hintereinander geschaltet. Ihre Bewegungsanteile addieren sich am TCP. Der Lageregler der Zusatzachsenregelung ermöglicht eine hohe Bandbreite der gesamten Regelung.

Der Nachlaufregler wirkt gegengleich auf die Basis- und Zusatzachsenregelung ein. Dadurch kann er beispielsweise die Position der Zusatzachse, bzw. des daran angeordneten Werkzeugs, verändern, ohne den Abstand zum Werkstück zu beeinflussen. Dies ermöglicht dem Nachlaufregler, stationär eine konstante Lage der Zusatzachse einzustellen. Außerdem wirkt der Nachlaufregler begrenzend auf den Hub, den die Zusatzachse machen muss.

Vorzugsweise umfasst zu diesem Zweck die Basisachsregelung ein erstes Kombinationsglied, in dem aus den Stellgrößen des ersten Reglers und des dritten Reglers eine Stellgröße für die Basisachse ermittelt wird und umfasst die Zusatzachsregelung ein zweites Kombinationsglied, in dem aus den Stellgrößen des zweiten und dritten Reglers eine Stellgrößen für die Zusatzachse ermittelt wird.

Bei einer bevorzugten Ausführungsform kann eine Vergleichseinrichtung vorgesehen sein, die aus einem Sollwert und einem Istwert eine Abweichung generiert und der Basisachsenregelung und der Zusatzachsenregelung zuführt. Dadurch wird der Regelfehler auf beide Regelungen gegeben und beide Regelungen versuchen, den Fehler zu verringern.

Bei einer vorteilhaften Ausgestaltung der Erfindung kann eine Basisachsenistwertmesseinrichtung vorgesehen sein, die mit einem Istwertermittlungsglied verbunden ist, weiches auch mit der Zusatzachsenistwertmesseinrichtung verbunden ist, und den der Vergleichseinrichtung zugeführten Istwert ermittelt. Dadurch ist eine optimale Rückkopplung gewährleistet, unter Berücksichtigung der Lage der Basisachse und der Zusatzachse sowie eventueller zusätzlicher Einflussgrößen, wie beispielsweise eine Abweichung zwischen dem tatsächlichen und dem im NC - Programm hinterlegten Höhenprofil eines Werkstücks.

Weitere Merkmale und Vorteile der Erfindung ergeben sich aus der nachfolgenden Beschreibung von Ausführungsbeispielen der Erfindung, anhand der Figuren der Zeichnung, die erfindungswesentliche Einzelheiten zeigen, und aus den Ansprüchen. Die einzelnen Merkmale können je einzeln für sich oder zu mehreren in beliebiger Kombination bei einer Variante der Erfindung verwirklicht sein.

Bevorzugte Ausführungsbeispiele der Erfindung sind in der Zeichnung schematisch dargestellt und werden nachfolgend mit Bezug zu den Figuren der Zeichnung näher erläutert. Es zeigt:
- Fig. 1: eine erste Werkzeugmaschine mit entlang zweier Achsrichtungen bewegbarem Werkstück;
- Fig. 2: eine Werkzeugmaschine mit einem in zwei Achsrichtungen bewegbaren Werkzeug;
- Fig. 3: eine Werkzeugmaschine mit fünf Achsrichtungen;
- Fig. 4: eine Werkzeugmaschine mit sechs Achsrichtungen;
- Fig. 5: eine Werkzeugmaschine mit vier Achsrichtungen und bewegbarem Werkstück;
- Fig. 6: ein Blockschaltbild zur Veranschaulichung des Steuerungskonzepts für eine Basisachse und Zusatzachse ohne Berücksichtigung zusätzlicher Einflussgrößen;
- Fig. 7: ein Blockschlatbild zur Veranschaulichung des Steuerungskonzepts für eine Basisachse und Zusatzachse mit Berücksichtigung zusätzlicher Einflussgrößen.

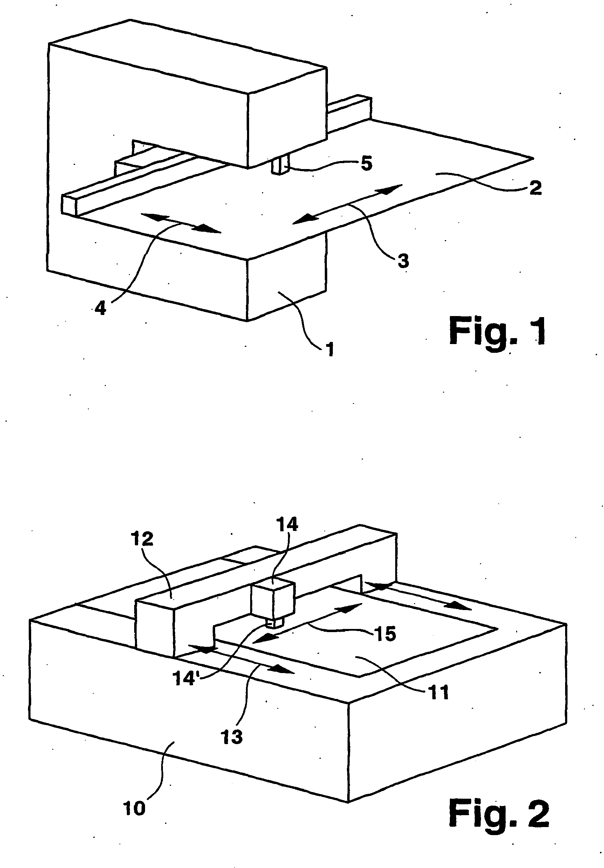

In der Fig. 1 ist eine Werkzeugmaschine 1 dargestellt, bei der ein Werkstück 2 entlang der Achsrichtungen 3, 4 bewegbar ist. Ein Werkzeughalter 5, der ein nicht dargestelltes Werkzeug aufnehmen kann, ist ebenfalls in Achsrichtung 4 bewegbar. Antriebe für das Werkstück, die in die Achsrichtungen 3, 4 wirken, und möglicherweise damit zusammenwirkende mechanische Komponenten, können als Werkstückachsen bezeichnet werden. Der Antrieb des Werkzeughalters 5, der in Achsrichtung 4 wirkt, kann als Maschinenachse bezeichnet werden.

In der Fig. 2 ist eine weitere Werkzeugmaschine 10 dargestellt, bei der das Werkstück 11 ortsfest angeordnet ist. Ein Portal 12 ist entlang der Achsrichtung 13 bewegbar. An dem Portal 12 ist eine Einrichtung 14 angeordnet, an der wiederum ein Werkzeughalter 14' angeordnet ist, der ein Werkzeug halten kann. Die Einrichtung 14 (und damit das Werkzeug) ist in Achsrichtung 15 bewegbar. Der Werkzeughalter 14' ist bezüglich der Einrichtung 14 in Achsrichtung 13 beweglich. Aus der Fig. 2 ist ersichtlich, dass die Einrichtung 14 eine geringere Masse aufweist als das Portal 12. Deshalb können Bewegungen in Achsrichtung 15 schneller durchgeführt werden als Bewegungen des Portals in Achsrichtung 13. Hochdynamische Bewegungen in Achsrichtung 13 können jedoch durch den Werkzeughalter 14' ausgeführt werden.

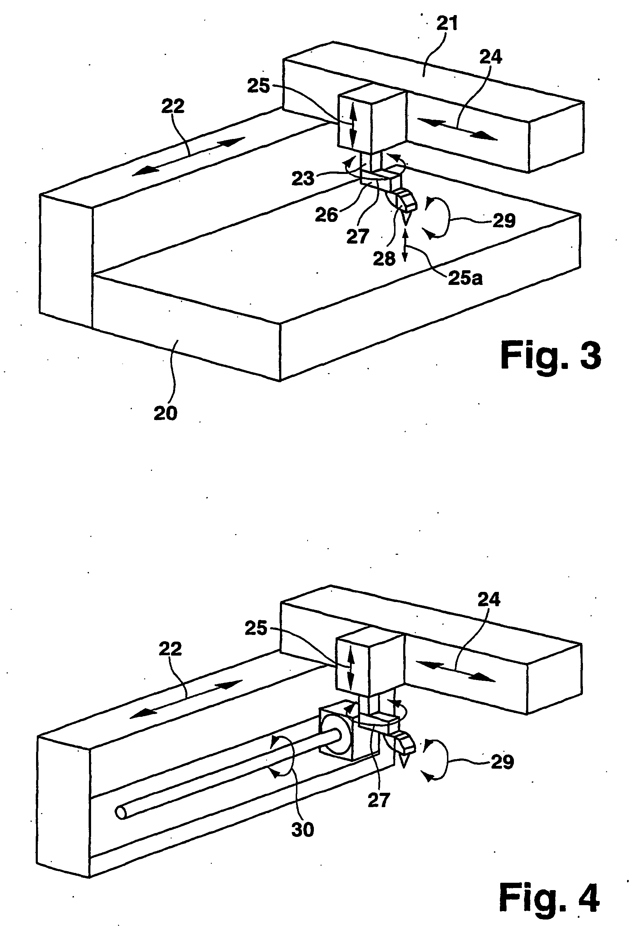

In der Fig. 3 ist eine Werkzeugmaschine 20 dargestellt, bei der ein Arm 21 entlang der Achsrichtung 22 bewegbar ist. Entlang dem Arm 21 ist eine Einrichtung 23 in Achsrichtung 24 bewegbar. Die Einrichtung 23 ist zusätzlich in Achsrichtung 25 bewegbar. Durch die Achsrichtungen 22, 24, 25 werden die X-, Y-, Z-Richtung eines kartesischen Koordinatensystems festgelegt. Ein Ausleger 26 ist in Achsrichtung 27 rotierbar. An dem Ausleger 26 ist ein Laserschneidkopf 28 angeordnet, der wiederum in Achsrichtung 29 rotierbar ist. Die bisher mit Bezug zu den Figuren 1 - 3 beschriebenen Achsen stellen Grundachsen dar.

Als Zusatzachse kommen bei allen Maschinen der Figuren 1 - 5 alle Achsen in Frage, welche eine Relativbewegung zwischen TCP und Werkstück in Richtung einer Grundachse erlauben und hierbei eine höhere Dynamik als die Grundachsen aufweisen. Vorzugsweise sind dies Werkzeugachsen mit geringem Gewicht in der Nähe des TCP oder Werkstückachsen mit geringem Gewicht.

Eine beispielhafte Ausführungsform lässt sich durch eine Längenänderung des Auslegers 27 realisieren, oder einer Orientierungsänderung des Kopfes 28 um Achse 29, was zu einer Translation des TCP führt. Bei kleinen Winkeln ist der Orientierungsfehler am Werkstück vernachlässigbar. Bei einer Abstandsregelung müsste die Zusatzachse in Strahlaustrittsrichtung 25a wirken.

Die Darstellung der Fig. 4 ähnelt der der Fig. 3, indem dieselben Achsrichtungen 22, 24, 25, 27, 29 vorgesehen sind. Zusätzlich ist eine Achsrichtung 30 vorgesehen, um die ein Werkstück gedreht werden kann.

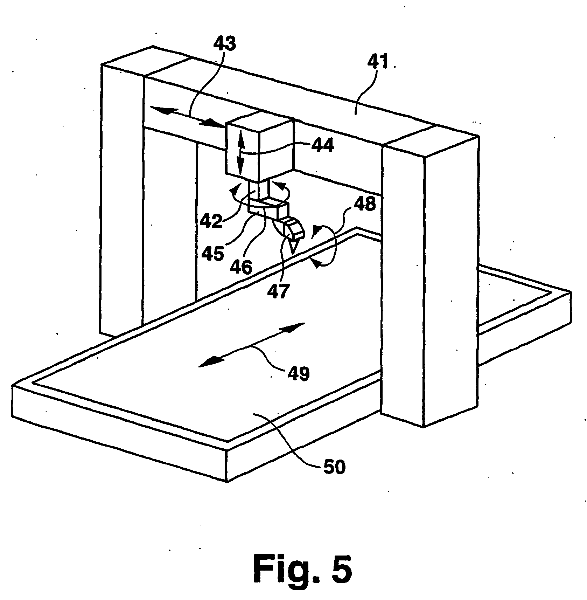

Eine weitere Ausgestaltung einer Werkzeugmaschine ist in der Fig. 5 dargestellt. An einem Portal 41 ist eine Einrichtung 42 in Achsrichtung 43 bewegbar. Die Einrichtung 42 ist wiederum in Achsrichtung 44 höhenverstellbar. Der Ausleger 45 ist in Achsrichtung 46 rotierbar und der Laserschneidkopf 47 ist in Achsrichtung 48 rotierbar. In die Achsrichtungen 43, 44, 46, 48 wirkende Antriebe können als Maschinenachsen bezeichnet werden, während ein in Achsrichtung 49 wirkender Antrieb als Werkstückachse bezeichnet werden kann, da entlang dieser Achse das Werkstück 50 bewegbar ist. Dadurch wird beispielsweise eine Grundachse realisiert. Bei einer Werkzeugmaschine nach Art der Erfindung muss bezüglich einer Achsrichtung (die sich als Resultierende mehrerer Grundachsenrichtungen ergeben kann) zumindest eine zweite Verstellmöglichkeit bestehen. In der Fig. 5 könnte dies dadurch realisiert werden, dass das Portal 41 ebenfalls in Achsrichtung 49 bewegbar ist.

Es ist hervorzuheben, dass die erfindungsgemäße Lösung an keine spezielle Anordnung der Werkzeug- oder Werkstückachsen gebunden ist.

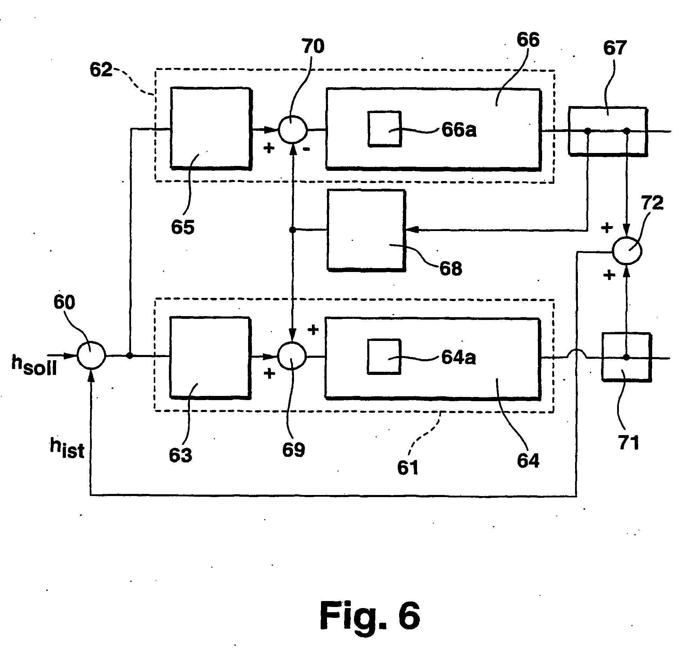

Fig. 6 zeigt eine vereinfachte exemplarische Realisierungsform der Reglerstruktur, welche den Grundgedanken des erfindungsgemäßen Verfahrens umsetzen kann. Einer Vergleichseinrichtung 60 wird ein Sollwert hₛₒₗₗ vorgegeben. Dieser wird in der Vergleichseinrichtung 60 mit einem Istwert hᵢₛₜ verglichen. Die Abweichung wird sowohl einer Basisachsenregelung 61 als auch einer Zusatzachsenregelung 62 zugeführt. Die Basisachsenregelung 61 umfasst einen ersten Regler 63, der aus der Abweichung eine Stellgröße für eine Basisachse 64 generiert, die zumindest einen Antrieb 64a umfasst.

Die Zusatzachsenregelung 62 umfasst einen zweiten Regler 65, der aus der Abweichung eine zweite Stellgröße für eine Zusatzachse 66 generiert, die zumindest einen Antrieb 66a umfasst. Der erste und zweite Regler 63, 65 sind als Lageregler ausgebildet.

In einer Zusatzachsenistwertmesseinrichtung 67 wird ein Istwert der Zusatzachse 66, beispielsweise eine Position des Werkzeugs entlang seines Verfahrwegs innerhalb der Zusatzachse 66, gemessen. Dieser Istwert wird einem dritten Regler 68, der als Nachlaufregler ausgebildet ist, zugeführt. Der dritte Regler 68 ermittelt eine Stellgröße derart, dass die Zusatzachse 66 stationär eine vorgegebene Lage einnimmt. Dadurch soll ausgedrückt werden, dass beispielsweise das durch die Zusatzachse 66 bewegbare Werkzeug stationär eine vorgegebene Position entlang seines Verfahrwegs innerhalb der Zusatzachse 66 einnimmt. Die so ermittelte Stellgröße wird der Basisachsenregelung 61 und der Zusatzachsenregelung 62 gegengleich zugeführt. Dies bedeutet, dass die durch den dritten Regler 68 ermittelte Stellgröße in einem Kombinationsglied 69 der Basisachsenregelung 61 zu der von dem ersten Regler 63 ermittelten Stellgröße addiert wird und die resultierende Stellgröße der Basisachse 64 zugeführt wird. Im Gegensatz dazu wird die durch den dritten Regler 68 ermittelte Stellgröße von der durch den zweiten Regler ermittelten Stellgröße im Kombinationsglied 70 subtrahiert und die resultierende Stellgröße der Zusatzachse 66 zugeführt.

Die resultierenden Stellgrößen können dabei unmittelbar einem oder mehreren Antrieben 64a, 66a der Zusatzachse 66 beziehungsweise der Basisachse 64 zugeführt werden. Es ist jedoch auch denkbar, dass die Stellgrößen entsprechenden Einrichtungen zur Realisierung der durch die Stellgrößen beschriebenen Bewegungen zugeführt werden. Beispielsweise kann als eine solche Einrichtung eine NC-Steuerung in der Basisachse 64 vorgesehen sein, die die Bewegung der Basisachse 64 durch geeignete Transformation auf mehrere Grundachsen aufteilt und deren Antriebe so ansteuert, dass die gewünschte Bewegung der Basisachse 64 entsteht.

In einer Basisachsenistwertmesseinrichtung 71 wird die Lage der Basisachse, beispielsweise der Stelle, an der die Zusatzachse befestigt ist, gemessen. Der gemessene Wert wird ebenso wie der Messwert der Zusatzachsenistwertmesseinrichtung 67 einem Istwertermittlungsglied 72 zugeführt. Daraus entsteht die Gesamtlage des Achsverbunds, welche der Vergleichseinrichtung 60 zugeführt wird.

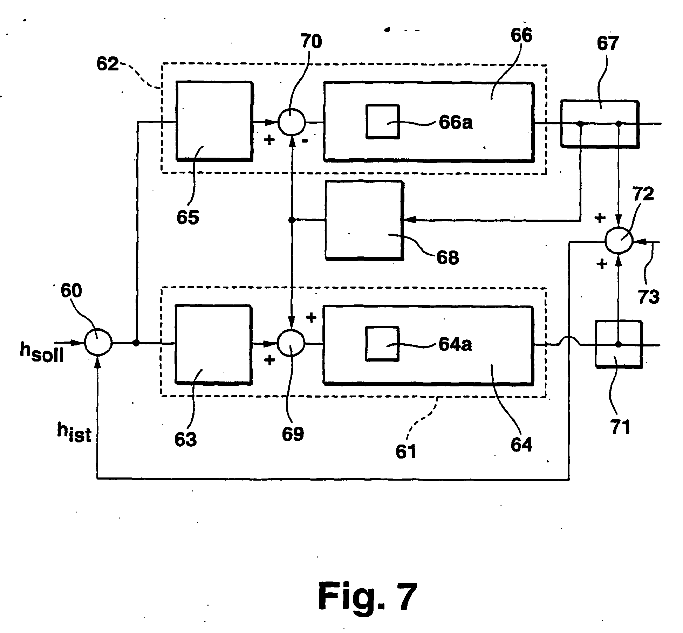

Im Falle einer Abstandsregelung (Fig. 7) setzt sich der gemessene Wert hᵢₛₜ aus der Gesamtlage des Achsverbunds sowie einer zusätzlichen Einflussgröße (angedeutet durch den Pfeil 73), nämlich einer Abweichung zwischen dem tatsächlichen und dem im NC-Programm hinterlegten Höhenprofil des Werkstücks zusammen.

## Patentansprüche

1. Verfahren zur Einstellung der Relativposition und/oder Relativbewegung zwischen einem Werkstück (2, 11, 50) und einem Werkzeug (28) einer Werkzeugmaschine (1, 10, 20) in Richtung einer Achse, wobei in einem ersten Regler (63) einer Basisachsregelung (61) eine Stellgröße für eine einen oder mehrere Antriebe (64a) umfassende Basisachse (64) und in einem zweiten Regler (65) einer Zusatzachsregelung (62) eine Stellgröße für eine wenigstens einen Antrieb (66a) umfassende höher dynamische Zusatzachse (66) generiert wird, wobei die Basisachse (64) und die Zusatzachse (66) in ihrer Wirkung mechanisch hintereinander geschaltet werden, **dadurch gekennzeichnet, dass** in einem dritten Regler (68) eine dritte Stellgröße generiert wird, die sowohl der Zusatzachsregelung (62) als auch der Basisachsregelung (61) gegengleich zugeführt wird, wobei ein Ist-Wert der Zusatzachse (66) erfasst wird und dem dritten Regler (68) zugeführt wird.

2. Verfahren nach Anspruch 1, **dadurch gekennzeichnet, dass** die Stellgröße im dritten Regler (68) derart ermittelt wird, dass das an der Zusatzachse (66) angeordnete Werkzeug (28) oder Werkstück (2, 11, 50) eine vorgegebene Position, vorzugsweise eine Mittenposition, bezüglich seines Verfahrwegs an der Zusatzachse (66) einnimmt.

3. Verfahren nach einem der vorhergehenden Ansprüche, **dadurch gekennzeichnet, dass** in der Basisachsregelung (61) die Stellgröße des ersten Reglers (63) und des dritten Reglers (68) addiert werden und die Summe als resultierende Stellgröße der Basisachse (64) zugeführt wird, und dass in der Zusatzachsregelung (62) die Stellgröße des dritten Reglers (68) von der Stellgröße des zweiten Reglers (65) subtrahiert wird und die Differenz als resultierende Stellgröße der Zusatzachse (66) zugeführt wird.

4. Verfahren nach einem der vorhergehenden Ansprüche, **dadurch gekennzeichnet, dass** ein Sollwert (hₛₒₗₗ) für die Relativposition und/oder Relativbewegung vorgegeben wird, ein Istwert (hᵢₛₜ) für die Relativposition und/oder Relativbewegung erfasst oder ermittelt wird und die Differenz dem ersten und zweiten Regler (63, 65) als Eingangsgröße zugeführt wird.

5. Verfahren nach einem der vorhergehenden Ansprüche, **dadurch gekennzeichnet, dass** der erste und zweite Regler (63, 65) eine Lageregelung und der dritte Regler (68) eine Nachlaufregelung durchführen.

6. Verfahren nach einem der vorhergehenden Ansprüche, **dadurch gekennzeichnet, dass** der erste Regler (63) schwächer parametriert wird, als es die Basisachse (64) erlaubt.

7. Verfahren nach einem der vorhergehenden Ansprüche, **dadurch gekennzeichnet, dass** anhand des resultierenden Stellsignals für die Basisachse (64) eine Transformation zur Aufteilung der Basisachsenbewegung auf mehrere Grundachsen durchgeführt wird.

8. Werkzeugmaschine (1, 10, 20) zur Durchführung des Verfahrens nach einem der vorhergehenden Ansprüche 1 bis 7, mit einer Basisachsregelung (61), umfassend einen ersten Regler (63) zur Ermittlung einer Stellgröße für eine einen oder mehrere Antriebe (64a) umfassende Basisachse (64) zur Bewegung eines Werkzeugs (28) oder eines Werkstücks (2, 11, 50) in einer Achsrichtung und mit einer Zusatzachsregelung (62), umfassend einen zweiten Regler (65) zur Ermittlung einer Stellgröße für eine einen oder mehrere Antriebe (66a) umfassende Zusatzachse (66) zur Bewegung eines Werkzeugs (28) oder Werkstücks (2, 11, 50) in dieselbe Achsrichtung, wobei die Basisachse (64) und die Zusatzachse (66) in ihrer Wirkung mechanisch hintereinander geschaltet sind, **dadurch gekennzeichnet, dass** ein dritter Regler (68) zur Generierung einer dritten Stellgröße vorgesehen ist, die sowohl der Basisachsenregelung (61) als auch der Zusatzachsenregelung (62) gegengleich zugeführt ist, wobei eine Zusatzachsenistwertmesseinrichtung (67) vorgesehen ist, die dem dritten Regler (68) eine Istgröße der Zusatzachsenregelung (62) zuführt.

9. Werkzeugmaschine nach Anspruch 8, **dadurch gekennzeichnet, dass** der erste und zweite Regler (63, 65) als Lageregler und der dritte Regler (68) als Nachlaufregler ausgebildet ist.

10. Werkzeugmaschine nach einem der vorhergehenden Ansprüche 8 oder 9, **dadurch gekennzeichnet, dass** die Basisachsregelung (61) ein erstes Kombinationsglied (69) umfasst, in dem aus den Stellgrößen des ersten Reglers (63) und des dritten Reglers (68) eine Stellgröße für die Basisachse ermittelt wird und die Zusatzachsregelung (62) ein zweites Kombinationsglied (70) umfasst, in dem aus den Stellgrößen des zweiten und dritten Reglers (65, 68) eine Stellgröße für die Zusatzachse (66) ermittelt wird.

11. Werkzeugmaschine nach einem der vorhergehenden Ansprüche 8 bis 10, **dadurch gekennzeichnet, dass** eine Vergleichseinrichtung (60) vorgesehen ist, die aus einem Sollwert (hₛₒₗₗ) und einem Istwert (hᵢₛₜ) eine Abweichung generiert und der Basisachsenregelung (61) und der Zusatzachsenregelung (62) zuführt.

12. Werkzeugmaschine nach einem der vorhergehenden Ansprüche, **dadurch gekennzeichnet, dass** eine Basisachsenistwertmesseinrichtung (71) vorgesehen ist, die mit einem Istwertermittlungsglied (72) verbunden ist, welches auch mit der Zusatzachsenistwertmesseinrichtung (67) verbunden ist, und den der Vergleichseinrichtung (60) zugeführten Istwert ermittelt.

## Claims

1. A method for adjusting the relative position and/or relative movement between a workpiece (2, 11, 50) and a tool (28) of a machine tool (1, 10, 20) in the direction of an axis, wherein an actuating variable for a basic axis (64) comprising one or more drives (64a) is generated in a first controller (63) of a basic axis control system (61) and an actuating variable for a higher-dynamic additional axis (66) comprising at least one drive (66a) is generated in a second controller (65) of an additional axis control system (62), wherein the basic axis (64) and the additional axis (66) are connected mechanically one behind the other, **characterized in that** a third actuating variable, which is diametrally fed both to the additional axis control system (62) and to the basic axis control system (61), is generated in a third controller (68), wherein an actual value of the additional axis (66) is detected and fed to the third controller (68).

2. The method according to claim 1, **characterized in that** the actuating variable is determined in the third controller (68) in such a way that the tool (28) or workpiece (2, 11, 50) disposed on the additional axis (66) assumes a preset position, preferably a central position, with respect to its traverse path on the additional axis (66).

3. The method according to any one of the preceding claims, **characterized in that** the actuating variable of the first controller (63) and of the third controller (68) are added up in the basic axis control system (61) and the sum is fed as a resultant actuating variable to the basic axis (64), and **in that** the actuating variable of the third controller (68) is subtracted from the actuating variable of the second controller (65) in the additional axis control system (62) and the difference is fed as a resultant actuating variable to the additional axis (66).

4. The method according to any one of the preceding claims, **characterized in that** a setpoint value (hₛₒₗₗ) is given for the relative position and/or relative movement, an actual value (hᵢₛₜ) is detected or determined for the relative position and/or relative movement and the difference is fed as an input variable to the first and second controller (63, 65).

5. The method according to any one of the preceding claims, **characterized in that** the first and second controller (63, 65) perform a position control and the third controller (68) performs a follow-up control.

6. The method according to any one of the preceding claims, **characterized in that** the first controller (63) is parameterised weaker than the basic axis (64) permits.

7. The method according to any one of the preceding claims, **characterized in that** a transformation for distributing the basic axis movement to a plurality of fundamental axes is carried out on the basis of the resultant actuating signal for the basic axis (64).

8. A machine tool (1, 10, 20) for performing the method according to any one of the preceding claims 1 to 7, with a basic axis control system (61), comprising a first controller (63) for determining an actuating variable for a basic axis (64) comprising one or more drives (64a) for the movement of a tool (28) or a workpiece (2, 11, 50) in an axis direction, and with an additional axis control system (62), comprising a second controller (65) for determining an actuating variable for an additional axis (66) comprising one or more drives (66a) for the movement of a tool (28) or workpiece (2, 11, 50) in the same axis direction, wherein the basic axis (64) and the additional axis (66) are connected mechanically one behind the other, **characterized in that** a third controller (68) is provided for generating a third actuating variable, which is diametrally fed both to the basic axis control system (61) and to the additional axis control system (62), wherein a device (67) for measuring an actual value of the additional axis is provided, which feeds an actual variable of the additional axis control system (62) to the third controller (68).

9. The machine tool according to claim 8, **characterized in that** the first and second controllers (63, 65) are designed as position controllers and the third controller (68) as a follow-up controller.

10. The machine tool according to any one of the preceding claims 8 or 9, **characterized in that** the basic axis control system (61) comprises a first combination element (69), in which an actuating variable for the basic axis is determined from the actuating variables of the first controller (63) and the third controller (68), and the additional axis control system (62) comprises a second combination element (70), in which an actuating variable for the additional axis (66) is determined from the actuating variables of the second and third controller (65, 68).

11. The machine tool according to any one of the preceding claims 8 to 10, **characterized in that** a comparison device (60) is provided, which generates a deviation from a setpoint value (hₛₒₗₗ) and an actual value (hᵢₛₜ) and feeds the same to the basic axis control system (61) and to the additional axis control system (62).

12. The machine tool according to any one of the preceding claims, **characterized in that** a device (71) for measuring an actual value of the basic axis is provided, which is connected to an element (72) for determining the actual value, said element also being connected to the device (67) for measuring the actual value of the additional axis, and determines the actual value fed to the comparison device (60).

## Revendications

1. Procédé de réglage de la position relative et/ou du mouvement relatif entre une pièce à usiner (2, 11, 50) et un outil (28) d'une machine-outil (1, 10, 20), dans la direction d'un axe, une grandeur de réglage, dédiée à un axe fondamental (64) incluant un ou plusieurs entraînement(s) (64a), étant générée dans un premier régulateur (63) d'une unité (61) de régulation d'axes fondamentaux et une grandeur de réglage, dévolue à un axe additionnel (66) de dynamique supérieure, incluant au moins un entraînement (66a), étant générée dans un deuxième régulateur (65) d'une unité (62) de régulation d'axes additionnels, ledit axe fondamental (64) et ledit axe additionnel (66) exerçant mécaniquement leur effet par un agencement en succession, **caractérisé par** la génération, dans un troisième régulateur (68), d'une troisième grandeur de réglage qui est affectée, avec symétrie spéculaire, aussi bien à l'unité (62) de régulation d'axes additionnels qu'à l'unité (61) de régulation d'axes fondamentaux, une valeur réelle de l'axe additionnel (66) étant alors détectée, puis affectée audit troisième régulateur (68).

2. Procédé selon la revendication 1, **caractérisé par le fait que** la grandeur de réglage est déterminée, dans le troisième régulateur (68), de façon telle que l'outil (28) ou la pièce à usiner (2, 11, 50), disposé(e) sur l'axe additionnel (66), prenne un emplacement préétabli et, de préférence, un emplacement central vis-à-vis de son trajet de déplacement sur ledit axe additionnel (66).

3. Procédé selon l'une des revendications précédentes, **caractérisé par le fait que** les grandeurs de réglage du premier régulateur (63) et du troisième régulateur (68) sont additionnées dans l'unité (61) de régulation d'axes fondamentaux, et la somme est affectée à l'axe fondamental (64) en tant que grandeur de réglage résultante ; et **par le fait que** la grandeur de réglage dudit troisième régulateur (68) est retranchée de la grandeur de réglage du deuxième régulateur (65), dans l'unité (62) de régulation d'axes additionnels, puis la différence est affectée à l'axe additionnel (66) en tant que grandeur de réglage résultante.

4. Procédé selon l'une des revendications précédentes, **caractérisé par le fait qu'**une valeur de consigne (hₛₒₗₗ) est préétablie pour la position relative et/ou le mouvement relatif, une valeur réelle (hᵢₛₜ) étant détectée ou déterminée pour ladite position relative et/ou ledit mouvement relatif, et la différence étant affectée aux premier et deuxième régulateurs (63, 65) en tant que grandeur d'entrée.

5. Procédé selon l'une des revendications précédentes, **caractérisé par le fait que** les premier et deuxième régulateurs (63, 65) effectuent une régulation de positions, et le troisième régulateur (68) effectue une régulation de courses ultérieures.

6. Procédé selon l'une des revendications précédentes, **caractérisé par le fait que** le premier régulateur (63) est paramétré plus faiblement que ce qui est autorisé par l'axe fondamental (64).

7. Procédé selon l'une des revendications précédentes, **caractérisé par le fait qu'**une transformation, visant à répartir le mouvement de l'axe fondamental sur plusieurs axes fondamentaux, est effectuée sur la base du signal de réglage résultant, dédié audit axe fondamental (64).

8. Machine-outil (1, 10, 20) destinée à la mise en oeuvre du procédé conforme à l'une des revendications 1 à 7 précédentes, comprenant une unité (61) de régulation d'axes fondamentaux qui comporte un premier régulateur (63) conçu pour déterminer une grandeur de réglage dédiée à un axe fondamental (64) incluant un ou plusieurs entraînement(s) (64a), en vue du mouvement d'un outil (28) ou d'une pièce à usiner (2, 11, 50) dans une direction axiale ; et une unité (62) de régulation d'axes additionnels qui comporte un deuxième régulateur (65) conçu pour déterminer une grandeur de réglage dévolue à un axe additionnel (66) incluant un ou plusieurs entraînement(s) (66a), en vue du mouvement d'un outil (28) ou d'une pièce à usiner (2, 11, 50) dans la même direction axiale, ledit axe fondamental (64) et ledit axe additionnel (66) exerçant mécaniquement leur effet par un agencement en succession, **caractérisée par le fait qu'**un troisième régulateur (68) est prévu pour la génération d'une troisième grandeur de réglage affectée, avec symétrie spéculaire, aussi bien à l'unité (61) de régulation d'axes fondamentaux qu'à l'unité (62) de régulation d'axes additionnels, sachant qu'il est prévu un dispositif (67) de mesure de valeurs réelles d'axes additionnels qui affecte, audit troisième régulateur (68), une grandeur réelle de ladite unité (62) de régulation d'axes additionnels.

9. Machine-outil selon la revendication 8, **caractérisée par le fait que** les premier et deuxième régulateurs (63, 65) sont réalisés sous la forme de régulateurs de positions, le troisième régulateur (68) étant réalisé sous la forme d'un régulateur de courses ultérieures.

10. Machine-outil selon l'une des revendications 8 ou 9 précédentes, **caractérisée par le fait que** l'unité (61) de régulation d'axes fondamentaux inclut un premier organe de combinaison (69) dans lequel une grandeur de réglage, dédiée à l'axe fondamental, est déterminée sur la base des grandeurs de réglage du premier régulateur (63) et du troisième régulateur (68), et l'unité (62) de régulation d'axes additionnels inclut un second organe de combinaison (70) dans lequel une grandeur de réglage, dévolue à l'axe additionnel (66), est déterminée sur la base des grandeurs de réglage des deuxième troisième régulateurs (65, 68).

11. Machine-outil selon l'une des revendications 8 à 10 précédentes, **caractérisée par le fait qu'**il est prévu un dispositif comparateur (60) qui génère un écart sur la base d'une valeur de consigne (hₛₒₗₗ) et d'une valeur réelle (hᵢₛₜ), et l'affecte à l'unité (61) de régulation d'axes fondamentaux et à l'unité (62) de régulation d'axes additionnels.

12. Machine-outil selon l'une des revendications précédentes, **caractérisée par le fait qu'**il est prévu un dispositif (71) de mesure de valeurs réelles d'axes fondamentaux, raccordé à un organe (72) de détermination de valeurs réelles, lequel est également connecté au dispositif (67) de mesure de valeurs réelles d'axes additionnels, et détermine la valeur réelle affectée au dispositif comparateur (60).
